# EUROPEAN PATENT APPLICATION

(11) **EP 4 629 069 A1**
(43) Date of publication of application: **08.10.2025**
(21) Application number: 23902270.0
(22) Date of filing: 17.10.2023
(51) Int. Cl.: G06F 9/451

(54) **INFORMATION DISPLAY METHOD AND APPARATUS, ELECTRONIC DEVICE, AND STORAGE MEDIUM**

(30) Priority: 13.12.2022 CN 202211603988
(71) Applicant: GUANGDONG OPPO MOBILE TELECOMMUNICATIONS CORP., LTD., Dongguan, Guangdong 523860 (CN)
(72) Inventor: FU, Qi, Dongguan, Guangdong 523860 (CN)
(74) Representative: Novagraaf Technologies
(86) International application number: PCT/CN2023/124988
(87) International publication number: WO 2024/125069

(57) **Abstract**

Disclosed in the embodiments of the present application are an information display method and apparatus, an electronic device, and a storage medium. The method comprises: when an electronic device is in a hover state, displaying a first display interface on a first screen, the first display interface comprising at least one application card, and each application card corresponding to one application; and, in response to a selection operation acting on a target application card, entering a second display interface, the second display interface being an interface of an application corresponding to the target application card, and the target application card being an application card amongst the at least one application card. In the method, simply selecting an application card on the first display interface may quickly enter the previously used hover display interface of the application corresponding to the application card, thus improving the user experience.

## Description

### CROSS-REFERNECE TO RELATED APPLICATIONS

The present application claims priority of Chinese Patent Application No. 202211603988.1, in the title of "INFORMATION DISPLAY METHOD AND APPARATUS, ELECTRONIC DEVICE, AND STORAGE MEDIUM", filed on December 13, 2022, the entire contents of which are hereby incorporated by reference in their entirety.

### TECHNICAL FIELD

The present disclosure relates to the field of electronic technologies, and in particular to an information display method, an apparatus, an electronic device, and a storage medium.

### BACKGROUND

With the advancement of electronic technologies, electronic devices have adopted increasingly larger screens to deliver enhanced user experiences. However, this trend toward larger displays has concurrently introduced challenges in portability. Consequently, electronic devices equipped with foldable displays have emerged and gained widespread adoption. By utilizing a screen folding mechanism, these devices can seamlessly transition between expanded and compact states, thereby striking an optimal balance between maximized viewing area and practical portability requirements.

### SUMMARY OF THE DISCLOSURE

In view of the above problems, the present disclosure proposes an information display method, an apparatus, an electronic device, and a storage medium to improve the above problems.

An information display method, performed by an electronic device; wherein the electronic device includes a device body that is foldable and a first screen, and the first screen is foldable together with the device body; in a case where the device body is in a folded state, the first screen is disposed on an inner side of the device body; the information display method includes:
in a case where the electronic device is in a hover state, displaying a first display interface on the first screen; wherein the first display interface includes at least one application card, each application card corresponding to an application; and
in response to a selection operation on a target application card, entering a second display interface; wherein the second display interface is an interface of an application corresponding to the target application card, and the target application card is one of the at least one application card.

An information display apparatus, performed by an electronic device; wherein the electronic device includes a device body that is foldable and a first screen, and the first screen is foldable together with the device body; in a case where the device body is in a folded state, the first screen is disposed on an inner side of the device body; the information display apparatus includes:
a first display unit, configured to, in a case where the electronic device is in a hover state, display a first display interface on the first screen; wherein the first display interface includes at least one application card, each application card corresponding to an application; and
a second display unit, configured to, in response to a selection operation of a target application card, enter a second display interface; wherein the second display interface is an interface of an application corresponding to the target application card, and the target application card is one of the at least one application card.

An electronic device, including a memory and one or more processors; wherein one or more programs are stored in the memory and configured to be executed by the one or more processors to perform the method as above.

A computer-readable storage medium; wherein the computer-readable storage medium stores program code; when the program code is executed by a processor, the processor performs the method as above.

### BRIEF DESCRIPTION OF THE DRAWINGS

In order to more clearly illustrate the technical solution in the embodiments of the present disclosure, the following is a brief description of the drawings needed to be used in the description of the embodiments. Obviously, the drawings in the following description are only some embodiments of the present disclosure. For those skilled in the art, other drawings may be obtained based on these drawings without creative labor.
FIG. 1 is a schematic diagram of an application scenario of an information display method according to some embodiments of the present disclosure.
FIG. 2 is a schematic diagram of an application scenario of an information display method according to some embodiments of the present disclosure.
FIG. 3 is a schematic diagram of an electronic device in an unfolded state according to some embodiments of the present disclosure.
FIG. 4 is a schematic diagram of an electronic device in a folded state according to some embodiments of the present disclosure.
FIG. 5 is a flowchart of an information display method according to some embodiments of the present disclosure.
FIG. 6 is a schematic diagram of a first screen according to some embodiments of the present disclosure.
FIG. 7 is a schematic diagram of a first display interface according to some embodiments of the present disclosure.
FIG. 8 is a schematic diagram of entering a second display interface according to some embodiments of the present disclosure.
FIG. 9 is a flowchart of an information display method according to other embodiments of the present disclosure.
FIG. 10 is a schematic diagram of a first region and a second region of a first screen according to other embodiments of the present disclosure.
FIG. 11 is a schematic diagram of switching a currently displayed application card in a first display interface according to other embodiments of the present disclosure.
FIG. 12 is a schematic diagram of switching a currently displayed application card in a first display interface according to other embodiments of the present disclosure.
FIG. 13 is a schematic diagram of clicking to enter a second display interface according to other embodiments of the present disclosure.
FIG. 14 is a schematic diagram of clicking to enter a second display interface according to other embodiments of the present disclosure.
FIG. 15 is a flowchart of an information display method according to further other embodiments of the present disclosure.
FIG. 16 is a schematic diagram of an interface after application classification according to other embodiments of the present disclosure.
FIG. 17 is a flowchart of an information display method according to still other embodiments of the present disclosure.
FIG. 18 is a structural block diagram of an information display apparatus according to some embodiments of the present disclosure.
FIG. 19 is a structural block diagram of an electronic device for executing an information display method according to some embodiments of the present disclosure.
FIG. 20 illustrates a storage unit for storing or carrying program code for implementing an information display method according to some embodiments of the present disclosure.

### DETAILED DESCRIPTION

The following description will refer to the accompanying drawings of the embodiments of the present disclosure to provide a clear and complete description of the technical solutions of the embodiments of the present disclosure. It should be noted that the embodiments described herein are merely some of the embodiments of the present disclosure and not all of them. All other embodiments obtained by those skilled in the art without making any creative contributions based on the embodiments of the present disclosure are within the scope of the present disclosure.

With the advancement of electronic technologies, electronic devices have adopted increasingly larger screens to deliver enhanced user experiences. However, this trend toward larger displays has concurrently introduced challenges in portability. Consequently, electronic devices equipped with foldable displays have emerged and gained widespread adoption. By utilizing a screen folding mechanism, these devices can seamlessly transition between expanded and compact states, thereby striking an optimal balance between maximized viewing area and practical portability requirements.

In the course of researching related information display methods, the inventor found that for conventional electronic devices with foldable screens, when entering a target application, users need to go through a series of cumbersome steps to open the target page of the target application, which affects the user experience.

Therefore, the inventor hereby proposes an information display method, an apparatus, an electronic device, and a storage medium described in the present disclosure. The method includes: in a case where the electronic device is in a hover state, displaying a first display interface on the first screen, where the first display interface includes at least one application card, each application card corresponding to an application; and in response to a selection operation of a target application card, entering a second display interface, where the second display interface is an interface of an application corresponding to the target application card, and the target application card is one of the multiple application cards. Through the above method, all applications supporting the hover mode are grouped in the first display interface. As a result, users only need to select an application card on the first display interface to quickly enter a hover display interface of the previous use of the application corresponding to the application card, thereby improving the user experience.

In some embodiments, the second display interface presents a first style in a case where the electronic device is in the hover state, and the second display interface presents a second style in a case where the electronic device is in another state; where the second style is different from the first style.

In some embodiments, the first style is an application-tailored display style.

In some embodiments, the first screen includes a first region and a second region. The method may further include: in a case where the electronic device is in the hover state, displaying the first display interface in the first region; or, in a case where the electronic device is in the hover state, displaying a first display content of the first display interface in the first region and displaying a second display content of the first display interface in the second region.

In some embodiments, the method may further include: in response to a first operation, entering the second display interface, where the first operation is an operation acting on the first region for selecting the target application card; or, in response to a second operation, entering the second display interface, where the second operation is an operation acting on the second region for selecting the target application card.

In some embodiments, an operation complexity of the second operation is greater than an operation complexity of the first operation.

In some embodiments, the method may further include: in a case where the electronic device is in the hover state, obtaining a historical usage time-point of each of multiple applications that support a hover mode; sorting multiple application cards corresponding to the multiple applications that support the hover mode based on the historical usage time-points, and obtaining multiple sorted application cards; and displaying the first display interface on the first screen, where a display content of the first display interface is the multiple sorted application cards.

In some embodiments, the method may further include: classifying the multiple applications that support the hover mode, and obtaining an application classification result, where the application classification result includes multiple application categories and multiple applications corresponding to each application category; and obtaining the historical usage time-point corresponding to each of the multiple applications corresponding to each application category.

In some embodiments, the method may further include: in a case where the electronic device is in the hover state, classifying multiple applications that support a hover mode, and obtaining an application classification result, where the application classification result includes multiple application categories and multiple applications corresponding to each application category; sorting multiple application cards corresponding to the multiple applications that support the hover mode based on the application classification result, and obtaining sorted multiple application cards; and displaying the first display interface on the first screen, where a display content of the first display interface is the sorted multiple application cards.

In some embodiments, the method may further include: obtaining a historical usage time-point of each of the multiple applications corresponding to each application category; in each application category, sorting the multiple application cards corresponding to the multiple applications based on the historical usage time-points, and obtaining the multiple sorted application cards corresponding to the same application category; and displaying the first display interface on the first screen, where the display content of the first display interface is the sorted multiple application cards corresponding to the same application category.

In some embodiments, the method may further include: sorting the multiple application cards corresponding to the multiple applications that support the hover mode based on a priority corresponding to each application category, and obtaining the sorted multiple application cards.

In some embodiments, the method may further include: in response to an operation on a target application category, displaying the multiple application cards corresponding to the target application category on the first display interface.

In some embodiments, the method may further include: in response to a preset touch operation, switching an application category corresponding to an application card currently to be displayed, and obtaining a new application category; and displaying the first display interface on the first screen, where an application corresponding to a display content of the first display interface belongs to the new application category.

In some embodiments, the method may further include: in response to the electronic device entering the hover state from a folded state, displaying the first display interface on the first screen.

In some embodiments, the method may further include: in response to the electronic device entering the hover state from an unfolded state, displaying the first display interface on the first screen.

In some embodiments, the method may further include: in a case where the electronic device is in a folded state and the second screen is in a lock screen state, in response to detecting that a folding angle of the electronic device is changed to within a predetermined angle range, determining that the electronic device is in the hover state and displaying the first display interface on the first screen.

In some embodiments, a display content of each application card included in the first display interface is a display content of a display interface, that supports the hover mode, last entered by a corresponding application, or is a display content of a home page of the corresponding application, or is a customized display content of the corresponding application.

The following is a description of the application scenarios of the interface display method provided by the embodiments of the present disclosure with reference to the accompanying drawings.

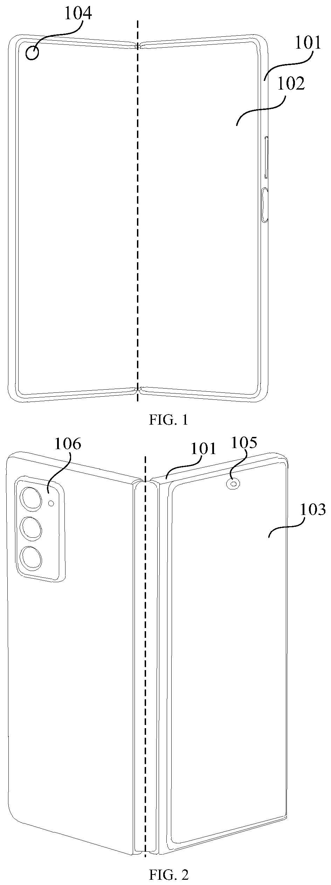

As shown in FIGS. 1 and 2, an electronic device according to some embodiments of the present disclosure includes a foldable device body 101, an image acquisition component, a first screen 102, and a second screen 103. The first screen 102 and the second screen 103 are disposed on opposite sides of the device body 101, where the first screen 102 can be folded together with the device body 101.

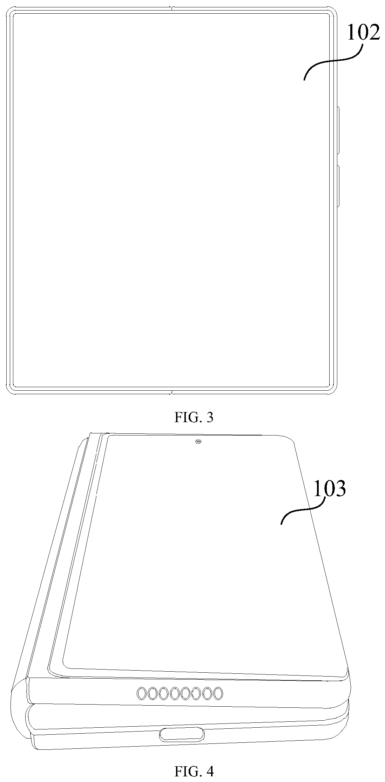

The image acquisition component may include a first front camera 104, a second front camera 105, and a rear camera 106. The first front camera 104 is arranged on a side where the first screen 102 is located, and the second front camera 105 is arranged on the second screen 103. The rear camera 106 is arranged on a side where the second screen 103 is located, and the rear camera 106 and the second screen 103 are oppositely arranged on both sides of a folding position of the device body 101 (indicated by the dashed lines in FIGS. 1 and 2). Furthermore, the device posture of the device body 101 of the electronic device according to the embodiments of the present disclosure may have three cases. For example, the device body may have an unfolded state, a folded state, and a hover state. The unfolded state may be as shown in FIG. 3, the folded state may be as shown in FIG. 4, and the hover state may be as shown in FIGS. 1 and 2, i.e., the hover state is a state between the fully unfolded state and the fully folded state. Furthermore, the hover state may be a state of the electronic device when the electronic device is bent to a predetermined angle range. The predetermined angle range may be set in a range of 1° to 150°; or in a range of 30° to 150°; or in a range of 60° to 120°, without specific limitation herein.

The following will describe in detail the various embodiments of the present disclosure with reference to the accompanying drawings.

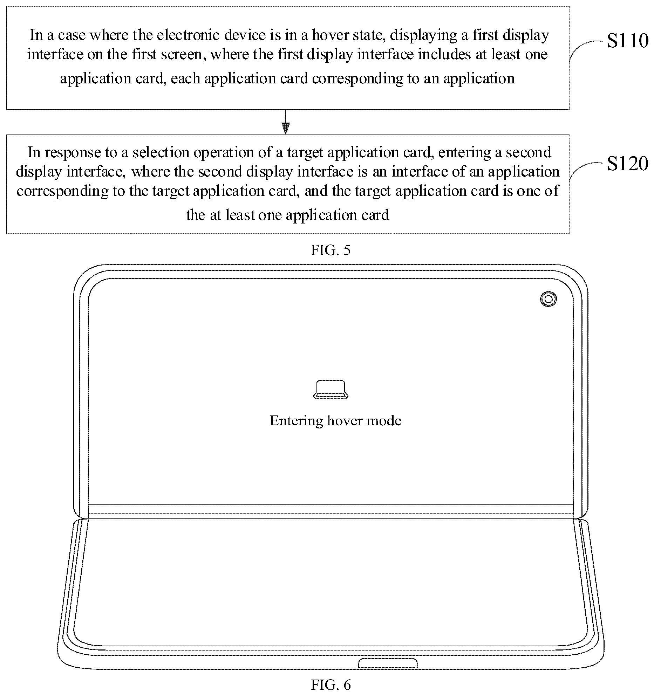

Referring to FIG. 5, an information display method provided by some embodiments of the present disclosure is applied to an electronic device, which includes a device body that is foldable and a first screen, where the first screen is foldable together with the device body, and in a case where the device body is in a folded state, the first screen is disposed on an inner side of the device body. The method includes operations at blocks illustrated in FIG. 5.

At block S110: In a case where the electronic device is in a hover state, displaying a first display interface on the first screen, where the first display interface includes at least one application card, each application card corresponding to an application.

In the embodiments of the present disclosure, the electronic device being in a hover state refers to a state of the electronic device when the folding angle of the electronic device is within a predetermined angle range. The predetermined angle range may be set in a range of 1° to 150°, i.e., when the folding angle of the electronic device is detected to be greater than or equal to 1° and less than or equal to 150°, it can be determined that the electronic device is in the hover state. Of course, the predetermined angle range may be set to other angle ranges, which are not specifically limited herein. The folding angle of the electronic device may be detected by an angle detection sensor set in the electronic device.

An application card is a new message display method designed for applications that support a hover mode. After the user adds an application card for an application that supports the hover mode, the messages of the application will be displayed to the user in the form of the application card. An application may correspond to at least one application card, and each application card may be configured to represent a display interface, that supports the hover mode, of the application. For example, when the application is a video playback program, the application card corresponding to the video playback program may be configured to represent a display interface, that supports video playback in the hover mode, of the application. The hover mode herein is a mode designed for applications that can be displayed or operated in the hover mode when the electronic device is in the hover state. Users can set a corresponding hover mode for an application. After setting the hover mode for an application, when the electronic device is detected to be in the hover mode, an application card corresponding to the application that supports the hover mode can be displayed in the first display interface when the first display interface is displayed.

In some embodiments of the present disclosure, a display content of each application card included in the first display interface is a display content of a display interface, that supports the hover mode, last entered by a corresponding application, or is a display content of a home page of the corresponding application, or is a customized display content of the corresponding application.

In some embodiments of the present disclosure, the display content of each application card may be determined based on whether the application that supports the hover mode in the electronic device is being used. In one implementation, when an application supporting the hover mode has been launched within a predetermined time period, the display content of the application card corresponding to the application may be a display interface, that supports the hover mode, last entered by the application; when the application supporting the hover mode has not been launched within the predetermined time period, the display content of the application card corresponding to the application may be a display content of a home page of the application; or it may be a customized display content of the application.

In one implementation, in response to the electronic device entering the hover state from another state, the first display interface is displayed on the first screen. Specifically, in a case where the electronic device is in the folded state, when it is detected that the folding angle of the electronic device has changed to within a predetermined angle range, it is determined that the electronic device is in the hover state, and the first display interface is displayed on the first screen. Alternatively, in a case where the electronic device is in the unfolded state and the first screen is in a lock screen state, when it is detected the folding angle of the electronic device has changed to within a predetermined angle range, it is determined that the electronic device is in the hover state and the first display interface is displayed on the first screen.

In some embodiments, the electronic device may further include a second screen, the first screen and the second screen being set opposite each other on both sides of the device body. In response to the electronic device entering the hover state from another state, the first display interface is displayed on the first screen. Specifically, in a case where the electronic device is in the folded state and the second screen is in a locked screen state, when it is detected that the folding angle of the electronic device has changed to within a predetermined angle range, it is determined that the electronic device is in the hover state, and the first display interface is displayed on the first screen. Alternatively, in a case where the electronic device is in the unfolded state and the second screen is in a locked screen state, when it is detected that the folding angle of the electronic device has changed to within a predetermined angle range, it is determined that the electronic device is in the hover state, and the first display interface is displayed on the first screen.

Furthermore, to allow users to view application cards on the first display interface more completely, in some embodiments, the first display interface is displayed on the first screen only when the folding angle of the electronic device is greater than a preset angle. The preset angle may be set to any angle within the predetermined angle range, such as 90°. When it is detected that the electronic device is in the hover mode and the folding angle is greater than 90°, the first display interface is displayed on the first screen.

When it is detected that the folding angle of the electronic device starts changing from 0°, a prompt of "Entering hover mode" may be displayed on the first screen of the electronic device to notify the user that the electronic device is entering the hover mode, as shown in FIG. 6. The first screen may further include simulated display icons corresponding to the shape and folding angle of the electronic device to notify the user of the folding state of the electronic device.

In the embodiments of the present disclosure, the first display interface may accommodate application cards corresponding to all applications that support the hover mode. Through the corresponding application cards, users can quickly jump to the user interface, that supports the hover mode, of the corresponding application. The display content of the user interface may be the display content of the corresponding application during its previous use; or it may be the display content of the home page of the corresponding application; or it may be the customized display content of the corresponding application. The content of the corresponding application during its previous use may be the content of the corresponding application when the electronic device is in the unfolded state; or it may be the content of the corresponding application when the electronic device is in the hover state, which is not specifically limited herein. The customized display content may be a display content specifically designed for the corresponding application with the characteristics of the application.

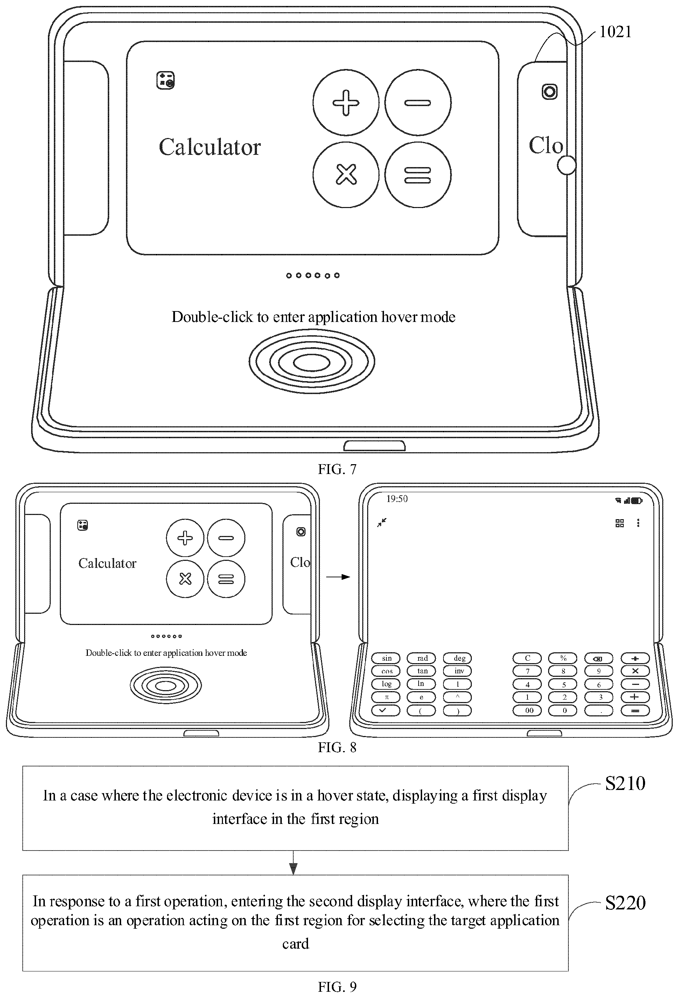

For example, a schematic diagram of the first display interface is shown in FIG. 7. The first display interface may include multiple application cards 1021 corresponding to multiple applications, and each application card 1021 may include an application identifier, an application name, etc. of its corresponding application, which are not specifically defined herein. When multiple application cards are displayed in the first display interface, a current display interface of the first display interface may only display one complete application card. The user may switch between the application cards displayed in the current display interface of the first display interface via a predefined operation, where the predefined operation may be a swipe operation.

At block S120: In response to a selection operation of a target application card, entering a second display interface, where the second display interface is an interface of an application corresponding to the target application card, and the target application card is one of the at least one application card.

In the embodiments of the present disclosure, the target application card is an application card selected by the user. The selection operation on the target application card is a preset operation for selecting an application card, such as a click operation or a swipe operation on the target application card, which is not specifically limited herein. The second display interface is a user interface, that supports the hover mode, of the application corresponding to the target application card.

In one implementation, the first display interface includes at least one application card, which can include two cases. In the first case, the first display interface includes one application card, in which case the application card is the target application card. The selection operation performed on the target application card may be a click operation performed on the target application card, where the click operation may include a single click or a double click, or may be a click operation performed more than twice, which is not specifically limited herein.

In the second case, the first display interface includes two or more application cards. In this case, when determining the target application card, it is necessary to select from the multiple application cards and determine an application card selected by the user as the target application card. When selecting the target application card from the multiple application cards, the application card may be selected through a swipe operation, and the swipe operation may cause switch between the multiple application cards included in the first display interface. When it is detected that the user is no longer switching application cards, the application card currently displayed in the first display interface is set as the target application card. Subsequently, when a selection operation acting on the target application card is detected, the system responds to the selection operation on the target application card and enters the second display interface corresponding to the target application card. For example, in a case where the target application card is an application card corresponding to a calculator, when a selection operation is detected on the application card corresponding to the calculator, the system responds to the selection operation on the application card corresponding to the calculator and enters the second display interface corresponding to the application card corresponding to the calculator, as shown in FIG. 8, which is a schematic diagram of entering the second display interface. The first diagram from left to right in FIG. 8 is a schematic diagram of the application card corresponding to the calculator displayed in the first display interface. The second diagram in FIG. 8 is a schematic diagram of the second display interface corresponding to the application card corresponding to the calculator. In the second display interface corresponding to the application card corresponding to the calculator, the user can perform data calculation operations.

In the embodiments of the present disclosure, the second display interface presents a first style in a case where the electronic device is in the hover state, and the second display interface presents a second style in a case where the electronic device is in another state; where the second style is different from the first style.

The first style is a display style adapted to the hover state when the electronic device is in the hover state, such as an application-tailored display style, as shown in the second diagram of FIG. 8. The second style may be a display style adapted to the folded state or unfolded state when the electronic device is in the folded state or unfolded state.

The information display method provided by the above embodiments of the present disclosure includes: in a case where the electronic device is in a hover state, displaying a first display interface on the first screen, where the first display interface includes at least one application card, each application card corresponding to an application; and in response to a selection operation of a target application card, entering a second display interface, where the second display interface is an interface of an application corresponding to the target application card, and the target application card is one of the at least one application card. Through the above method, all applications supporting the hover mode are grouped in the first display interface. As a result, users only need to select an application card on the first display interface to quickly enter a hover display interface of the previous use of the application corresponding to the application card, thereby improving the user experience.

Referring to FIG. 9, an information display method provided by some embodiments of the present disclosure is applied to an electronic device, which includes a device body that is foldable and a first screen, where the first screen is foldable together with the device body, and in a case where the device body is in a folded state, the first screen is disposed on an inner side of the device body. The first screen includes a first region and a second region. The method includes operations at blocks illustrated in FIG. 9.

At block S210: In a case where the electronic device is in a hover state, displaying a first display interface in the first region.

In the embodiments of the present disclosure, the first screen may be divided into two regions, including a first region and a second region. The first region may be a content display region; the second region may be a simulated touch region. In some embodiments, while the first region serves as a content display region, it may further serve as a touch region. The touch operations supported by the first region can include a swipe operation and a click operation, where the swipe operation may be performed to browse application cards, and the click operation may be performed to select and pick an application card. Similarly, the touch operations supported by the second region may also include a swipe operation and a click operation. The touch operations performed on the second region may be mapped to the first region, i.e., the swipe operation performed on the second region may be performed to browse/switch application cards displayed in the first region, and the click operation performed on the second region may be performed to select and pick an application card displayed in the first region. Furthermore, to distinguish between click operations applied to the first region and the second region, the click operation applied to the first region and the click operation applied to the second region may be different. For example, in the first region, when a single click operation is detected, it can be determined that an application card has been selected; while in the second region, when a double-click operation is detected, it can be determined that an application card has been selected. In some embodiments, to prevent accidental touches, the click operations on the first and second regions may be click operations with more clicks, which is not specifically limited herein.

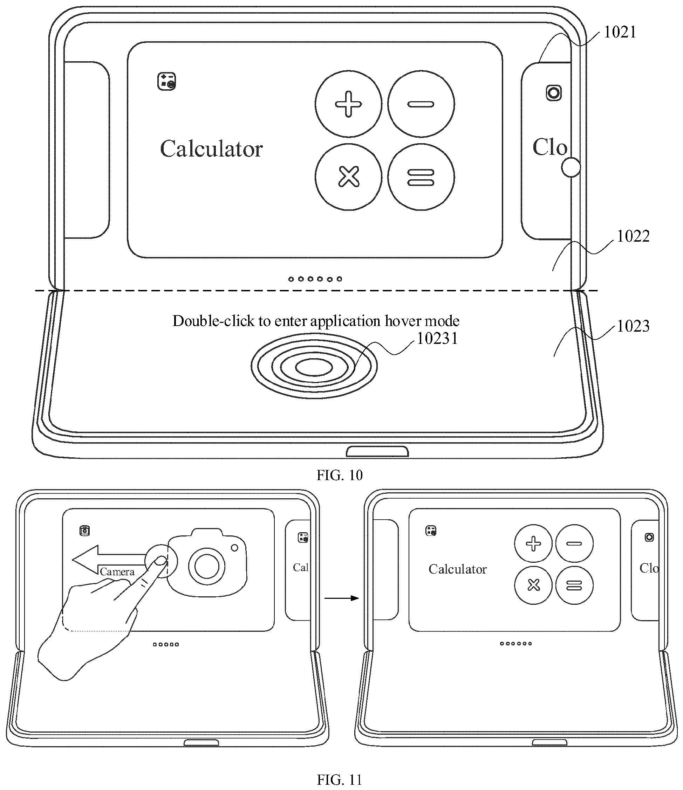

For example, the first and second regions may be illustrated in FIG. 10, where the first region 1022 and the second region 1023 correspond to the upper screen and lower screen of the first screen, respectively. The first region 1022 is configured to display multiple application cards, while the second region 1023 is configured to display a simulated touch control region. When the multiple application cards are displayed in the first region 1022, the second region 1023 may simultaneously display a touch-sensitive control 10231 and a prompt message indicating "Double-click to enter application hover mode". The touch-sensitive control 10231 is configured to receive and respond to a touch operation performed by the user on the second region 1023, while the prompt message informs the user that he/she can enter the application hover mode by double-tapping the second region 1023.

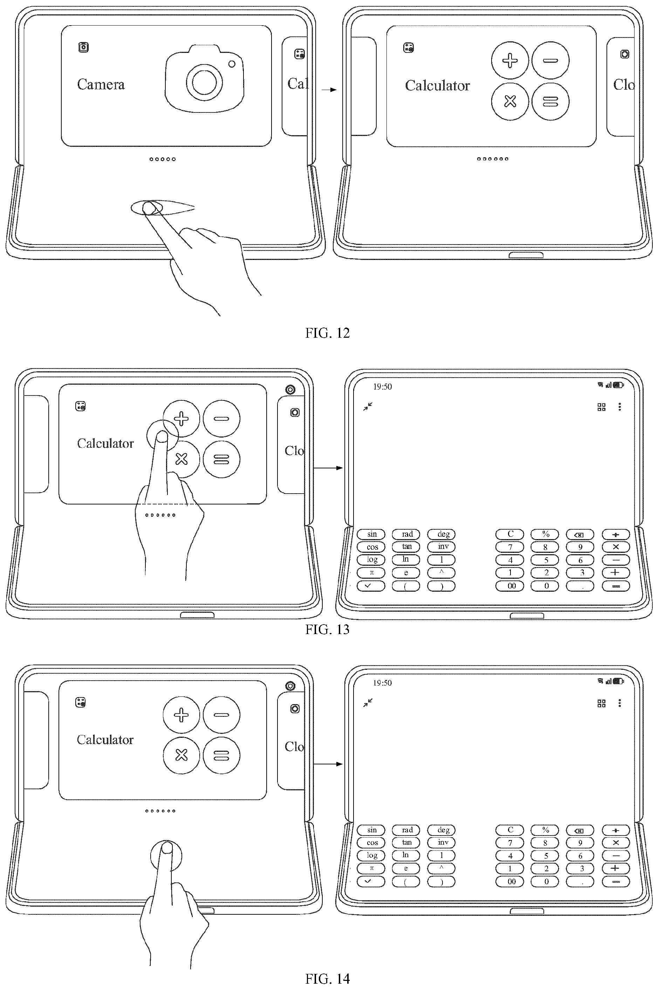

Furthermore, schematic diagrams illustrating the switching of the currently displayed application card in the first display interface are shown in FIGS. 11 and 12. FIG. 11 is a schematic diagram illustrating the switching of application cards in the first region, and FIG. 12 is a schematic diagram illustrating the switching of application cards in the second region. In FIG. 11, in the first region, when a swipe operation on the currently displayed application card is detected, in response to the swipe operation, a next application card is switched and displayed. For example, as shown in FIG. 11, the currently displayed application card is an application card corresponding to the camera application, and the next application card is an application card corresponding to the calculator application. In the first region, when a swipe operation is detected on the camera-corresponding application card, the calculator-corresponding application card is switched and displayed. In FIG. 12, in the second region, when a swipe operation is detected on the currently displayed application card, in response to the swipe operation, a next application card is switched and displayed. For example, as shown in FIG. 12, the currently displayed application card is an application card corresponding to the camera application, and the next application card is an application card corresponding to the calculator application. In the second region, when a swipe operation is detected on the camera-corresponding application card, the calculator-corresponding application card is switched and displayed.

In one implementation, when the electronic device is in the hover state, the first display interface is displayed in the first region. The application cards displayed in the first display interface may be arranged in a predefined order, and one complete application card is displayed at a time in the first display interface. The currently displayed application card in the first display interface may be switched by a swipe operation on the first region or a swipe operation on the second region. The number of application cards that can be displayed simultaneously in the first display interface is limited, and generally up to eight application cards can be displayed simultaneously.

Alternatively, when the electronic device is in the hover state, a first display content of the first display interface is displayed in the first region, and a second display content of the first display interface is displayed in the second region.

The first display content and the second display content together constitute all the display content included in the first display interface. For example, as shown in FIG. 7, the application cards in the first display interface may be displayed in the first display region of the first screen, and the prompt "Double-click to enter application hover mode" and the touch prompt region may be displayed in the second display region of the first screen.

At block S220: In response to a first operation, entering the second display interface, where the first operation is an operation acting on the first region for selecting the target application card.

In the embodiments of the present disclosure, the first operation is an operation performed on the first region to select the target application card. In the first region, this operation may be a click operation, such as a single click.

In one implementation, when the first operation is detected on the target application card in the first region, in response to the first operation, the system enters the second display interface corresponding to the target application card.

For example, a schematic diagram of clicking to enter the second display interface is illustrated in FIG. 13. As shown in FIG. 13, the target application card is an application card corresponding to the calculator. In the first region, when a click operation on the application card corresponding to the calculator is detected, the system enters a calculation interface, that supports the hover mode, corresponding to the application card corresponding to the calculator.

In one implementation, in response to a second operation, the second display interface is entered, and the second operation is an operation acting on the second region for selecting the target application card.

The second operation is an operation acting on the second region for selecting the target application card, and in the second region, the operation may be different from the click operation that acts on the first region, such as a double-click operation. Since the second region is a simulated touch region, to prevent accidental touches, the operational complexity of the second operation may be set higher than that of the first operation. For example, when the first operation is a click operation, the second operation may be a double-click operation or multi-click operations, etc.

In one implementation, when the second operation acting on the target application card is detected in the second region, the system enters the second display interface corresponding to the target application card in response to the second operation.

As an example, a schematic diagram of clicking to enter the second display interface is illustrated in FIG. 14. As shown in FIG. 14, the target application card is an application card corresponding to the calculator. In the second region, when a double-click operation is detected on the application card corresponding to the calculator, the system enters a calculation interface, that supports the hover mode, corresponding to the application card corresponding to the calculator.

The information display method provided by the above embodiments of the present disclosure includes: in a case where the electronic device is in a hover state, displaying a first display interface in the first region; and in response to a first operation, entering the second display interface. Through the above method, all applications supporting the hover mode are grouped in the first display interface. As a result, users only need to select an application card on the first display interface to quickly enter a hover display interface of the previous use of the application corresponding to the application card, thereby improving the user experience.

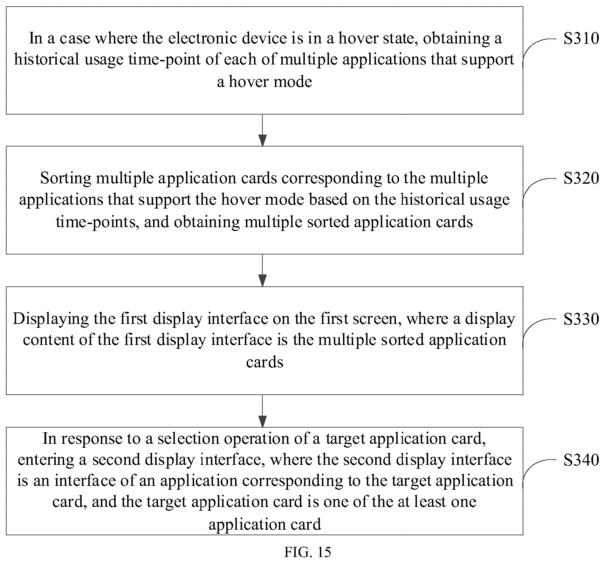

Referring to FIG. 15, an information display method provided by some embodiments of the present disclosure is applied to an electronic device, which includes a device body that is foldable and a first screen, where the first screen is foldable together with the device body, and in a case where the device body is in a folded state, the first screen is disposed on an inner side of the device body. The method includes operations at blocks illustrated in FIG. 15.

At block S310: In a case where the electronic device is in a hover state, obtaining a historical usage time-point of each of multiple applications that support a hover mode.

In the embodiment of the present disclosure, the multiple applications that support the hover mode may be applications that are set to support the hover mode. In the electronic device, the user may set the hover mode for different applications. The historical usage time-point corresponding to each application supporting the hover mode refers to an end time of the last use of the application supporting the hover mode. The electronic device may record the start time and end time of each use of each application supporting the hover mode, and when it is necessary to obtain the historical usage time-point of an application, the end time of each use of the application may be taken as the historical usage time-point of the application.

After recording the start time and end time of each use of every application supporting the hover mode, the electronic device may store the start time and end time of each use of every application supporting the hover mode in a predefined storage region. When the historical usage time-point of an application is needed, the historical usage time-point corresponding to the application may be directly retrieved from the predefined storage region. When recording the start time and end time of each use of an application supporting the hover mode, the electronic device may establish a correspondence table between applications and historical usage time-points. The historical usage time-points recorded in the correspondence table refer to the end times of the previous use of the applications. Whenever an application is detected as being used, the start time and end time of this use are recorded, and the end time of the application's use is compared with the historical usage time-point recorded in the correspondence table for that application. When the end time of the application's use is later than the historical usage time-point recorded in the correspondence table for that application, the historical usage time-point recorded in the correspondence table for that application is updated. In other words, the historical usage time-point recorded in the correspondence table for an application is always the end time of the application's most recent use.

**In** one implementation, the obtaining a historical usage time-point of each of multiple applications that support a hover mode includes: classifying the multiple applications that support the hover mode, and obtaining an application classification result, where the application classification result includes multiple application categories and multiple applications corresponding to each application category; and obtaining the historical usage time-point corresponding to each of the multiple applications corresponding to each application category.

Furthermore, when there are a large number of applications that support the hover mode, to facilitate users in quickly finding the target application card, the multiple applications that support the hover mode may be classified into application categories, where the application categories may represent the functions of the applications. For example, the application categories may include: Video and Film, Music, Sports, and Utility Tools. In the embodiments of the present disclosure, the electronic device may classify each application into a corresponding application category based on attribute information of the application, where the attribute information may include an application name and an application function.

After the multiple applications that support the hover mode are classified, the applications corresponding to each application category may be obtained, and then the historical usage time-point of each application corresponding to each application category may be obtained.

Of course, the operation of classifying the multiple applications that support the hover mode in the embodiments of the present disclosure may be performed before detecting that the electronic device is in the hover state, or after detecting that the electronic device is in the hover state. In some embodiments, the operation of classifying the multiple applications that support the hover mode may be performed after obtaining the historical usage time-point corresponding to each of the multiple applications that support the hover mode. In this case, after the historical usage time-point corresponding to each of the multiple applications that support the hover mode is obtained, the applications may be classified based on the attribute information of each application, thereby also obtaining the historical usage time-point corresponding to each application in each application category. No specific limitation is made herein.

At block S320: Sorting multiple application cards corresponding to the multiple applications that support the hover mode based on the historical usage time-points, and obtaining multiple sorted application cards.

In the embodiments of the present disclosure, when the historical usage time-point corresponding to each application that supports the hover mode is obtained, the application cards corresponding to the applications that support the hover mode may be sorted based on the historical usage time-point corresponding to each application that supports the hover mode, so as to obtain the sorted multiple application cards.

When sorting the application cards corresponding to the applications that support the hover mode based on the historical usage time-point corresponding to each application that supports the hover mode, the sorting may be performed in order from the nearest to the farthest historical usage time-point, such that the application card of the most recently used application is always displayed in the first display interface, allowing the users to quickly enter the second display interface corresponding to the most recently used application through the corresponding application card. The order from nearest to farthest herein refers to the order of proximity to the current time.

In one implementation, the sorting multiple application cards corresponding to the multiple applications that support the hover mode based on the historical usage time-points, and obtaining multiple sorted application cards include: in each application category, sorting the multiple application cards corresponding to the multiple applications based on the historical usage time-points, and obtaining the multiple sorted application cards corresponding to the application category.

After dividing each application that supports the hover mode into a corresponding application category based on its attribute information according to the aforementioned methods, the application cards corresponding to multiple applications belonging to the same application category may be sorted in order of historical usage time-point from nearest to farthest.

In some embodiments, when all application cards in the first display interface belong to different application categories, the application cards are not classified into application categories and are directly sorted in order of historical usage time-point from nearest to farthest.

When among the multiple application cards included in the first display interface, at least two application cards belong to the same application category, the multiple application cards may be classified into application categories first to obtain the application category result. Then, within the same application category, the multiple application cards belonging to the same application category may be sorted in order of historical usage time-point from nearest to farthest.

For example, the first display interface includes application cards (App Cards) 1, 2, 3, 4, and 5, with App Card 1 corresponding to a historical usage time-point of 12:15:00, App Card 2 corresponding to a historical usage time-point of 12:17:02, App Card 3 corresponding to a historical usage time-point of 12:11:40, App Card 4 corresponding to a historical usage time-point of 12:15:08, and App Card 5 corresponding to a historical usage is 12:12:00.

When App Card 1, App Card 2, App Card 3, App Card 4, and App Card 5 all belong to different app categories, then they are sorted directly according to the historical usage time-points of App Card 1, App Card 2, App Card 3, App Card 4, and App Card 5 from nearest to farthest, resulting in the sorted order: App Card 2, App Card 4, App Card 1, App Card 5, and App Card 3.

When Application Card 1, Application Card 2, and Application Card 5 belong to a first application category, and App Card 3 and App Card 4 belong to a second application category, then they are sorted in account with the same application category to obtain the sorting result corresponding to each application category. The sorting result corresponding to the first application category is App Card 2, App Card 1, and App Card 5, and the sorting result corresponding to the second application category is App Card 4 and App Card 3.

In some embodiments, the process described in S310 and S320 may be: in a case where the electronic device is in a hover state, classifying multiple applications that support a hover mode, and obtaining an application classification result, where the application classification result includes multiple application categories and multiple applications corresponding to each application category; sorting multiple application cards corresponding to the multiple applications that support the hover mode based on the application classification result, and obtaining sorted multiple application cards.

In the embodiments of the present disclosure, when the electronic device is in the hover state, the multiple application cards corresponding to the multiple applications supporting the hover mode may be sorted based on the category of each application supporting the hover mode. Specifically, a priority may be pre-set for each application category. After classifying the multiple applications that support the hover mode and obtaining the application category of each application that supports the hover mode, the application cards corresponding to the applications may be sorted according to the priority corresponding to each application category.

Of course, there may be multiple applications corresponding to the same application category. In this case, the priority of the application cards corresponding to multiple applications with the same application category is also the same. The historical usage time-point corresponding to each application with the same application category may be obtained, and then the multiple application cards corresponding to the multiple applications may be sorted according to the chronological order of the historical usage time-point corresponding to each application with the same application category.

At block S330: Displaying the first display interface on the first screen, where a display content of the first display interface is the multiple sorted application cards.

In the embodiments of the present disclosure, after sorting the multiple application cards in the aforementioned manner, the multiple application cards are displayed in the first display interface according to the sorting order. When displaying the multiple application cards according to the sorting order, the multiple application cards may be displayed in a layered manner. In the layered display, the application card displayed at the top is the application card with the highest priority, and the user may switch between application cards by performing a swipe operation.

In one implementation, the displaying the first display interface on the first screen includes: displaying the first display interface on the first screen, where the display content of the first display interface is the multiple sorted application cards corresponding a same application category.

After the multiple application cards belonging to the same application category are sorted, when displaying multiple application cards, they are displayed in an order of the application categories. The first application card displayed in each application category is the application card corresponding to the most recently used application in that application category.

At block S340: In response to a selection operation of a target application card, entering a second display interface, where the second display interface is an interface of an application corresponding to the target application card, and the target application card is one of the at least one application card.

In one implementation, in response to an operation acting on the target application category, multiple application cards corresponding to the target application category are displayed on the first display interface.

In some embodiments of the present disclosure, after classifying the multiple application cards into categories, when selecting a target application card, it is necessary to first select the target application category. After entering the multiple application cards corresponding to the target application category, the target application card is selected from the multiple application cards corresponding to the target application card. The target application category is the application category to which the target application card belongs.

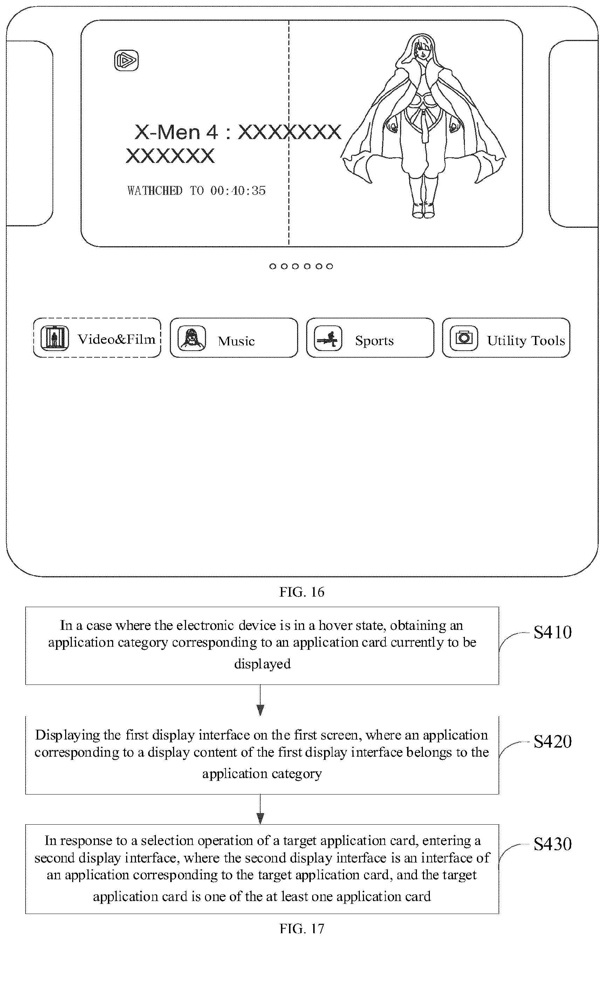

For example, an interface diagram after application classification is illustrated in FIG. 16. As shown in FIG. 16, multiple application categories may be included, such as Video and Film, Music, Sports, and Utility Tools. Each application category includes multiple application cards. For example, in FIG. 16, when an application category box is shown dashed, it indicates that the application category is the one selected by the user. More specifically, as shown in FIG. 16, the application category box of the application category Video and Film is dashed, which indicates that Video and Film is the application category selected by the user. This application category may include multiple application cards corresponding to various video playback applications.

In the embodiments of the present disclosure, each application card may include some feature information of the display content in the corresponding second display interface, such as display time and display name of the display content in the second display interface, which is not specifically limited herein.

The information display method provided by the above embodiments of the present disclosure includes: in a case where the electronic device is in a hover state, obtaining a historical usage time-point of each of multiple applications that support a hover mode; sorting multiple application cards corresponding to the multiple applications that support the hover mode based on the historical usage time-points, and obtaining multiple sorted application cards; displaying the first display interface on the first screen, where a display content of the first display interface is the multiple sorted application cards; and in response to a selection operation of a target application card, entering a second display interface, where the second display interface is an interface of an application corresponding to the target application card, and the target application card is one of the at least one application card. Through the above method, all applications supporting the hover mode are grouped in the first display interface. As a result, users only need to select an application card on the first display interface to quickly enter a hover display interface of the previous use of the application corresponding to the application card, thereby improving the user experience.

Referring to FIG. 17, an information display method provided by some embodiments of the present disclosure is applied to an electronic device, which includes a device body that is foldable and a first screen, where the first screen is foldable together with the device body, and in a case where the device body is in a folded state, the first screen is disposed on an inner side of the device body. The method includes operations at blocks illustrated in FIG. 17.

At block S410: In a case where the electronic device is in a hover state, obtaining an application category corresponding to an application card currently to be displayed.

In the embodiments of the present disclosure, the application card to be displayed may be a pre-set application card to be displayed on the first display interface.

When it is detected that the electronic device is in the hover state, the application category corresponding to the application card currently to be displayed is obtained, such that when multiple application cards are to be displayed on the first screen, it can be determined application cards corresponding to which application category are to be displayed.

In some cases, when the electronic device establishes a communication connection with another electronic device, the electronic device may continue to display a display interface of the other electronic device, and the application card to be displayed may be an application card sent by the other electronic device. When the electronic device receives the application card sent by the other electronic device, the electronic device may obtain the application category corresponding to the application card when the electronic device is detected to be in the hover state, thereby comparing the historical usage time-point of the application cards originally included in the application category in the electronic device with the historical usage time-point of the application card to be displayed, and reordering the application cards corresponding to the application category.

In one implementation, the obtaining an application category corresponding to an application card currently to be displayed includes: in response to a preset touch operation, switching the application category corresponding to the application card currently to be displayed, and obtaining a new application category.

The preset touch operation is a pre-set operation for switching application categories, such as setting the preset touch operation as a two-finger horizontal swipe or a multi-finger horizontal swipe, etc., which is not specifically limited herein.

When the preset touch operation is detected, the application category of the application card displayed on the first display interface is switched. During the application category switch, all application cards corresponding to the currently displayed application category may be dragged and switched using the preset touch operation.

The preset touch operation herein may be acting on a first region of the first screen or on a second region of the first screen, which is not specifically limited herein.

At block S420: Displaying the first display interface on the first screen, where an application corresponding to a display content of the first display interface belongs to the application category.

In some embodiments of the present disclosure, when the application category of the application card to be displayed is obtained, all application cards included in the application category corresponding to the application card to be displayed are displayed on the first display interface.

In one implementation, the first display interface is displayed on the first screen, where an application corresponding to a display content of the first display interface belongs to the new application category.

After the application category switch is performed, all application cards corresponding to the switched application category are displayed on the first display interface.

At block S430: In response to a selection operation of a target application card, entering a second display interface, where the second display interface is an interface of an application corresponding to the target application card, and the target application card is one of the at least one application card.

The information display method provided by the above embodiments of the present disclosure includes: in a case where the electronic device is in a hover state, obtaining an application category corresponding to an application card currently to be displayed; displaying the first display interface on the first screen, where an application corresponding to a display content of the first display interface belongs to the application category; and in response to a selection operation of a target application card, entering a second display interface, where the second display interface is an interface of an application corresponding to the target application card, and the target application card is one of the at least one application card. Through the above method, all applications supporting the hover mode are grouped in the first display interface. As a result, users can quickly enter the hover display interface of the last used application corresponding to the application card in the first display interface by simply selecting the application card in the first display interface, thereby enhancing the user experience.

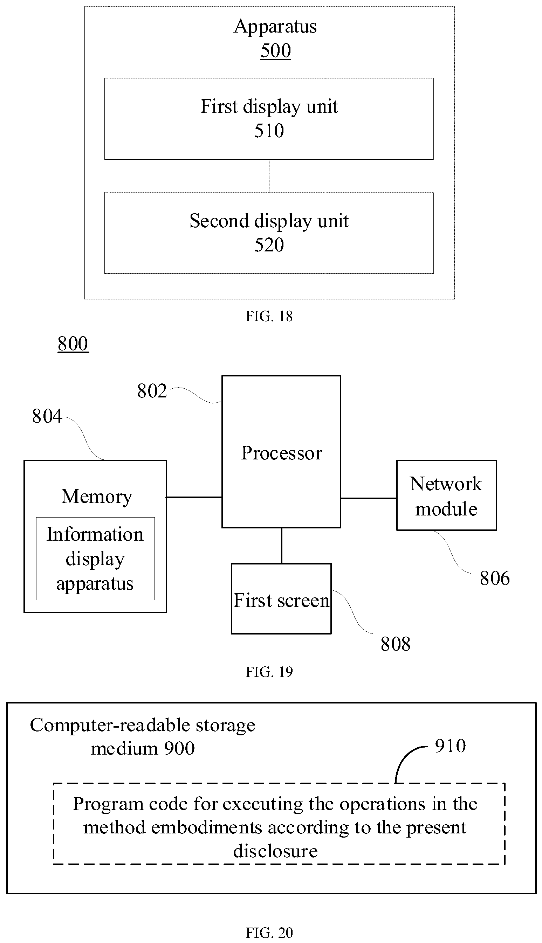

Referring to FIG. 18, an information display apparatus 500 provided by some embodiments of the present disclosure is performed by an electronic device, which includes a device body that is foldable and a first screen, where the first screen is foldable together with the device body, and in a case where the device body is in a folded state, the first screen is disposed on an inner side of the device body. The apparatus 500 includes the following elements.

A first display unit 510, configured to, in a case where the electronic device is in a hover state, display a first display interface on the first screen, where the first display interface includes at least one application card, each application card corresponding to an application.

In one implementation, the first display unit 510 is specifically configured to, in a case where the electronic device is in the hover state, display the first display interface in the first region; or, in a case where the electronic device is in the hover state, display a first display content of the first display interface in the first region and display a second display content of the first display interface in the second region.

In another implementation, the first display unit 510 is specifically configured to, in a case where the electronic device is in the hover state, obtain a historical usage time-point of each of multiple applications that support a hover mode; sort multiple application cards corresponding to the multiple applications that support the hover mode based on the historical usage time-points, and obtain multiple sorted application cards; and display the first display interface on the first screen, where a display content of the first display interface is the multiple sorted application cards.

In some embodiments, the first display unit 510 is specifically configured to, in a case where the electronic device is in the hover state, classify multiple applications that support a hover mode, and obtaining an application classification result, where the application classification result includes multiple application categories and multiple applications corresponding to each application category; sort multiple application cards corresponding to the multiple applications that support the hover mode based on the application classification result, and obtain sorted multiple application cards; and display the first display interface on the first screen, where a display content of the first display interface is the sorted multiple application cards.

The first display unit 510 is further configured to, in each application category, sort the multiple application cards corresponding to the multiple applications based on the historical usage time-points, and obtain the multiple sorted application cards corresponding to the same application category; and display the first display interface on the first screen, where the display content of the first display interface is the sorted multiple application cards corresponding to the same application category.

In some embodiments, the first display unit 510 is further configured to, in response to an operation on a target application category, display the multiple application cards corresponding to the target application category on the first display interface.

In some embodiments, the first display unit 510 is further configured to, in response to a preset touch operation, switch an application category corresponding to an application card currently to be displayed, and obtain a new application category; and display the first display interface on the first screen, where an application corresponding to a display content of the first display interface belongs to the new application category.

In some embodiments, the first display unit 510 is further configured to classify the multiple applications that support the hover mode, and obtaining an application classification result, where the application classification result includes multiple application categories and multiple applications corresponding to each application category; and obtain the historical usage time-point corresponding to each of the multiple applications corresponding to each application category.

In some embodiments, the first display unit 510 is further configured to sort the multiple application cards corresponding to the multiple applications that support the hover mode based on a priority corresponding to each application category, and obtain the sorted multiple application cards.

In some embodiments, the first display unit 510 is further configured to, in response to the electronic device entering the hover state from a folded state, display the first display interface on the first screen.

In some embodiments, the first display unit 510 is further configured to, in response to the electronic device entering the hover state from an unfolded state, display the first display interface on the first screen.

In some embodiments, the first display unit 510 is further configured to, in a case where the electronic device is in a folded state and the second screen is in a lock screen state, in response to detecting that a folding angle of the electronic device is changed to within a predetermined angle range, determine that the electronic device is in the hover state and display the first display interface on the first screen.

In some embodiments, a display content of each application card included in the first display interface is a display content of a display interface, that supports the hover mode, last entered by a corresponding application, or is a display content of a home page of the corresponding application, or is a customized display content of the corresponding application.

A second display unit 520, configured to, in response to a selection operation of a target application card, enter a second display interface, where the second display interface is an interface of an application corresponding to the target application card, and the target application card is one of the at least one application card. In some embodiments, the second display interface presents a first style in a case where the electronic device is in the hover state, and the second display interface presents a second style in a case where the electronic device is in another state; where the second style is different from the first style. In some embodiments, the first style is an application-tailored display style.

In one implementation, the second display unit 520 is specifically configured to, in response to a first operation, enter the second display interface, where the first operation is an operation acting on the first region for selecting the target application card; or, in response to a second operation, enter the second display interface, where the second operation is an operation acting on the second region for selecting the target application card. In some embodiments, an operation complexity of the second operation is greater than an operation complexity of the first operation.

It should be noted that the apparatus embodiments in the present disclosure correspond to the aforementioned method embodiments. The specific principles in the apparatus embodiments may be referred to in the aforementioned method embodiments and will not be repeated here.

An electronic device provided by the present disclosure will be described with reference to FIG. 19.

Referring to FIG. 19, based on the aforementioned information display method and apparatus, the present disclosure further provides an electronic device 800 capable of executing the aforementioned information display method. The electronic device 800 includes one or more processors 802 (only one is shown for illustration), a memory 804, a network module 806, and a first screen 808, which are mutually coupled. The memory 804 stores a program capable of executing the content of the aforementioned embodiments, and the processor 802 can execute the program stored in the memory 804.

The processor 802 may include one or more processing cores. The processor 802 connects various parts within the electronic device 800 through various interfaces and lines, and executes various functions of the electronic device 800 and processes data by running or executing instructions, programs, code sets, or instruction sets stored in the memory 804, and by calling data stored in the memory 804. In some embodiments, the processor 802 may be implemented using at least one of the following hardware forms: digital signal processing (DSP), field-programmable gate array (FPGA), or programmable logic array (PLA). The processor 802 may integrate one or more of the following: a central processing unit (CPU), a graphics processing unit (GPU), and a modem. The CPU primarily handles the operating system, user interface, and applications; the GPU is responsible for rendering and drawing display content; and the modem handles wireless communication. It is understood that the above-mentioned modem may be implemented separately through a communication chip instead of being integrated into the processor 802.

The memory 804 may include a random-access memory (RAM) and a read-only memory (ROM). The memory 804 may be configured to store instructions, programs, code, code sets, or instruction sets. The memory 804 may include a program storage region and a data storage region, where the program storage region may store instructions for implementing an operating system, instructions for implementing at least one function (e.g., touch functionality, audio playback functionality, image playback functionality, etc.), and instructions for implementing the method embodiments, etc. For example, the memory 804 may store an apparatus for displaying information. The information display apparatus may be the aforementioned apparatus 500. The data storage region may store data created by the electronic device 800 during use (such as phone book, audio and video data, chat record data, etc.).

The network module 806 is configured to receive and transmit electromagnetic waves, realize the mutual conversion of electromagnetic waves and electrical signals, and thereby communicate with a communication network or other devices, such as communicating with an audio playback device. The network module 806 may include various existing circuit elements for performing these functions, such as an antenna, a radio frequency transceiver, a digital signal processor, an encryption/decryption chip, a user identity module (SIM) card, a memory, and so on. The network module 806 may communicate with various networks such as the Internet, an enterprise intranet, or a wireless network, or communicate with other devices via a wireless network. The wireless network may include a cellular telephone network, a wireless local area network, or a metropolitan area network. For example, the network module 806 may exchange information with a base station.

The first screen 808 may be configured for interface display. The first screen 808 may be folded with the device body, and when the device body is in the folded state, the first screen 808 is disposed on an inner side of the device body.

In some embodiments, the electronic device 800 may further include a second screen, which may also be configured for interface display, with the first screen 808 and the second screen being disposed on opposite sides of the device body.

Referring to FIG. 20, which is a block diagram of a computer-readable storage medium according to some embodiments of the present disclosure. The computer-readable storage medium 900 stores program code, which can be called by a processor to execute the method described in the above method embodiments.

The computer-readable storage medium 900 may be an electronic storage medium such as flash memory, electrically erasable programmable read-only memory (EEPROM), EPROM, hard disk, or ROM. In some embodiments, the computer-readable storage medium 900 includes a non-transitory computer-readable storage medium. The computer-readable storage medium 900 has storage space for program code 910 that executes any of the method steps described above. This program code may be read from or written to one or more computer program products. The program code 910 may, for example, be compressed in an appropriate format.

The present disclosure provides an information display method, an apparatus, an electronic device, and a storage medium. The method includes: in a case where the electronic device is in a hover state, displaying a first display interface on the first screen, where the first display interface includes at least one application card, each application card corresponding to an application; and in response to a selection operation of a target application card, entering a second display interface, where the second display interface is an interface of an application corresponding to the target application card, and the target application card is one of the at least one application card. Through the above method, all applications supporting the hover mode are grouped in the first display interface. As a result, users only need to select an application card on the first display interface to quickly enter a hover display interface of the previous use of the application corresponding to the application card, thereby improving the user experience.

The above description of the embodiments of the present disclosure has been provided with reference to the accompanying drawings. However, the present disclosure is not limited to the specific embodiments described above. The specific embodiments described above are merely illustrative and not limiting. Those skilled in the art, under the guidance of the present disclosure, may make many modifications without departing from the scope of the present disclosure as defined by the appended claims.

## Claims

1. An information display method, performed by an electronic device; wherein the electronic device comprises a device body that is foldable and a first screen, and the first screen is foldable together with the device body; in a case where the device body is in a folded state, the first screen is disposed on an inner side of the device body; the information display method comprises:
in a case where the electronic device is in a hover state, displaying a first display interface on the first screen; wherein the first display interface comprises at least one application card, each application card corresponding to an application; and
in response to a selection operation on a target application card, entering a second display interface; wherein the second display interface is an interface of an application corresponding to the target application card, and the target application card is one of the at least one application card.

2. The method according to claim 1, wherein the second display interface presents a first style in a case where the electronic device is in the hover state, and the second display interface presents a second style in a case where the electronic device is in another state; the second style is different from the first style.

3. The method according to claim 2, wherein the first style is an application-tailored display style.

4. The method according to claim 1, wherein the first screen comprises a first region and a second region; the displaying a first display interface on the first screen comprises:
in a case where the electronic device is in the hover state, displaying the first display interface in the first region; or,
in a case where the electronic device is in the hover state, displaying a first display content of the first display interface in the first region, and displaying a second display content of the first display interface in the second region.

5. The method according to claim 4, wherein the entering a second display interface comprises:
in response to a first operation, entering the second display interface; wherein the first operation is an operation acting on the first region for selecting the target application card; or,
in response to a second operation, entering the second display interface; wherein the second operation is an operation acting on the second region for selecting the target application card.

6. The method according to claim 5, wherein an operation complexity of the second operation is greater than an operation complexity of the first operation.

7. The method according to claim 1, wherein the displaying a first display interface on the first screen comprises:
in a case where the electronic device is in the hover state, obtaining a historical usage time-point of each of a plurality of applications that support a hover mode;
sorting the plurality of application cards corresponding to the plurality of applications that support the hover mode based on the historical usage time-points, and obtaining a plurality of sorted application cards; and
displaying the first display interface on the first screen, wherein a display content of the first display interface is the plurality of sorted application cards.

8. The method according to claim 7, wherein the obtaining a historical usage time-point of each of a plurality of applications that support a hover mode comprises:
classifying the plurality of applications that support the hover mode, and obtaining an application classification result; wherein the application classification result comprises a plurality of application categories and a plurality of applications corresponding to each application category; and
obtaining the historical usage time-point corresponding to each of the plurality of applications corresponding to each application category.

9. The method according to claim 1, wherein the displaying a first display interface on the first screen comprises:
in a case where the electronic device is in the hover state, classifying a plurality of applications that support a hover mode, and obtaining an application classification result; wherein the application classification result comprises a plurality of application categories and a plurality of applications corresponding to each application category;
sorting a plurality of application cards corresponding to the plurality of applications that support the hover mode based on the application classification result, and obtaining a plurality of sorted application cards; and
displaying the first display interface on the first screen, wherein a display content of the first display interface is the plurality of sorted application cards.

10. The method according to claim 9, wherein the sorting a plurality of application cards corresponding to the plurality of applications that support the hover mode based on the application classification result, and obtaining a plurality of sorted application cards comprise:
obtaining a historical usage time-point of each of the plurality of applications corresponding to each application category; and
in each application category, sorting the plurality of application cards corresponding to the plurality of applications based on the historical usage time-points, and obtaining the plurality of sorted application cards corresponding to the application category;
wherein the displaying the first display interface on the first screen comprises:
displaying the first display interface on the first screen, wherein the display content of the first display interface is the plurality of sorted application cards corresponding to one of the plurality of application categories.

11. The method according to claim 9, wherein the sorting a plurality of application cards corresponding to the plurality of applications that support the hover mode based on the application classification result, and obtaining a plurality of sorted application cards comprise:
sorting the plurality of application cards corresponding to the plurality of applications that support the hover mode based on a priority corresponding to each application category, and obtaining the plurality of sorted application cards.

12. The method according to any one of claims 9-11, further comprising:
in response to an operation on a target application category, displaying the plurality of application cards corresponding to the target application category on the first display interface.

13. The method according to any one of claims 1-12, wherein the displaying a first display interface on the first screen comprises:
in response to a preset touch operation, switching an application category corresponding to an application card currently to be displayed, and obtaining a new application category; and
displaying the first display interface on the first screen, wherein an application corresponding to a display content of the first display interface belongs to the new application category.

14. The method according to any one of claims 1-13, wherein the displaying a first display interface on the first screen comprises:
in response to the electronic device entering the hover state from a folded state, displaying the first display interface on the first screen.

15. The method according to any one of claims 1-13, wherein the displaying a first display interface on the first screen comprises:
in response to the electronic device entering the hover state from an unfolded state, displaying the first display interface on the first screen.

16. The method according to any one of claims 1-15, wherein the electronic device further comprises a second screen, and the first screen and the second screen are disposed on opposite sides of the device body; the information display method further comprises:
in a case where the electronic device is in a folded state and the second screen is in a lock screen state, in response to detecting that a folding angle of the electronic device is changed to within a predetermined angle range, determining that the electronic device is in the hover state and displaying the first display interface on the first screen.

17. The method according to any one of claims 1-16, wherein a display content of each of the at least one application card included in the first display interface is a display content of a display interface, that supports the hover mode, last entered by a corresponding application, or is a display content of a home page of the corresponding application, or is a customized display content of the corresponding application.

18. An information display apparatus, performed by an electronic device; wherein the electronic device comprises a device body that is foldable and a first screen, and the first screen is foldable together with the device body; in a case where the device body is in a folded state, the first screen is disposed on an inner side of the device body; the information display apparatus comprises:
a first display unit, configured to, in a case where the electronic device is in a hover state, display a first display interface on the first screen; wherein the first display interface comprises at least one application card, each application card corresponding to an application; and
a second display unit, configured to, in response to a selection operation of a target application card, enter a second display interface; wherein the second display interface is an interface of an application corresponding to the target application card, and the target application card is one of the at least one application card.

19. An electronic device, comprising one or more processors; wherein one or more programs are stored in the memory and configured to be executed by the one or more processors to perform the method according to any one of claims 1 to 17.

20. A computer-readable storage medium; wherein the computer-readable storage medium stores program code; when the program code is executed by a processor, the processor performs the method according to any one of claims 1 to 17.
